# EUROPEAN PATENT APPLICATION

(11) **EP 3 053 718 A1**
(43) Date of publication of application: **10.08.2016**
(21) Application number: 14850391.5
(22) Date of filing: 26.09.2014
(51) Int. Cl.: B27B 19/09, B23D 49/16, B23D 51/02

(54) **CUTTING TOOL**

(30) Priority: 01.10.2013 JP 2013206719; 01.10.2013 JP 2013206720
(71) Applicant: Hitachi Koki Co., Ltd., Tokyo 108-6020 (JP)
(72) Inventor: TERASHIMA, Hideaki, Hitachinaka-shi Ibaraki 312-8502 (JP); IWATA, Satoshi, Hitachinaka-shi Ibaraki 312-8502 (JP)
(74) Representative: Parker, Andrew James
(86) International application number: PCT/JP2014/075629
(87) International publication number: WO 2015/050055

(57) **Abstract**

Provided is cutting tool capable of smooth cutting even when a level difference occurs between the cut sections when cutting a curved line in an easily bendable cutting material. A jigsaw (1) comprises a housing (2), a motor held in the housing (2), a plunger on the tip of which a blade (6) can be mounted and which is driven by the motor and reciprocates, and a base (41) that is attached to the housing (2) and is provided so as to move together with the housing (2) on the material that is being cut. The jigsaw is provided with a plate (7), which can be attached to and detached from the base (4) so as to be positioned on the base surface (41A) that is on the side of the base (41) opposite to the housing (2) and which is formed to be shorter than the base surface (41A) in the cutting direction.

## Description

### [Technical Field]

The present invention relates to a cutting tool, and particularly to a cutting tool that cuts a workpiece by reciprocating a blade.

### [Background Art]

A cutting tool such as a jigsaw known in the art performs cutting operations by converting the rotary motion of a motor serving as the drive source to reciprocal motion of a blade. One such cutting tool cuts the workpiece with a reciprocating blade as the main body of the tool is moved while a base attached to the main body remains in contact with the workpiece (for example, refer to Patent Literature 1 shown below).

### [Citation List]

### [Patent Literature]

[PTL 1] Japanese Patent No. 4525532

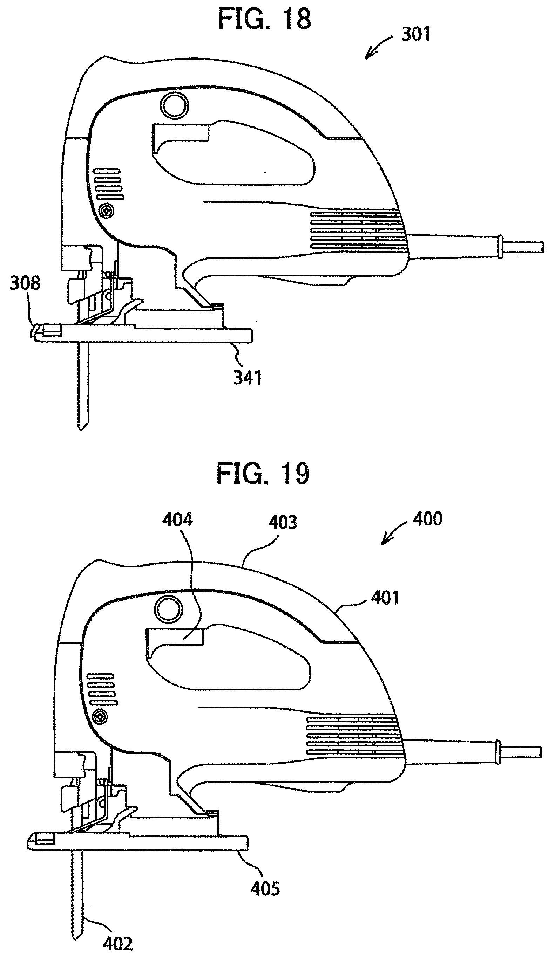

Fig. 19 is a side elevation view showing the external appearance of a conventional jigsaw. The jigsaw 400 in Fig. 19 includes a motor (not shown) built into a housing 401. The jigsaw 400 converts the rotary motion of the motor to reciprocal motion of a blade 402. A handle 403 is formed in the upper portion of the jigsaw 400, and a trigger 404 is provided on the bottom of the handle 403 for switching the motor on and off. A base 405 is mounted on the bottom of the housing 401. The operator grips the handle 403 and, with the bottom surface of the base 405 contacting the workpiece, pushes the body of the jigsaw 400 in a cutting direction. At this time, the base 405 slides over the workpiece in the cutting direction while the blade 402, which is reciprocating up and down, cuts through the workpiece.

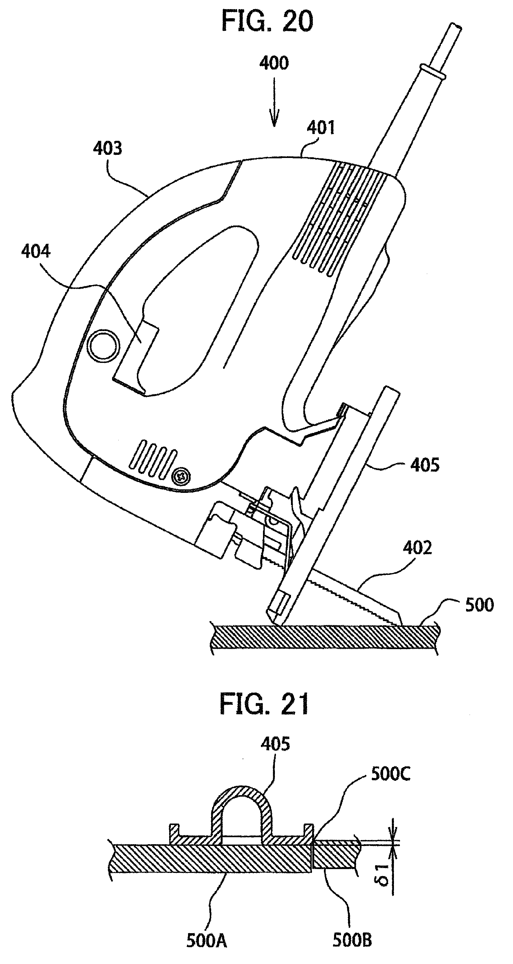

Although the jigsaw 400 can be used to cut a workpiece from its edge inward, in some cases the jigsaw 400 is needed to perform an interior cut. To perform an interior cut, the operator first forms a starter hole by executing a plunge cut to cut into the workpiece from above. Then, with the blade 402 inserted in the starter hole, the operator can cut a desired shape out of the interior of the workpiece. Fig. 20 is an explanatory diagram illustrating a plunge cut performed with a conventional jigsaw. In this operation, the operator grips the handle 403, tilts the top of the housing 401 forward, and places the tip of the cutting edge formed along the front of the blade 402 in contact with the starting point of the cut on a workpiece 500. Next, the operator squeezes the trigger 404 to begin reciprocating the blade 402 so as to cut into the workpiece 500 and form a hole.

### [Summary of Invention]

### [Technical Problem]

When the jigsaw 400 described above is used to cut a flexible workpiece such as wood veneer, the weight of the body of the jigsaw 400 is transferred through the base 405 to cut sections of the workpiece to the rear of the blade 402, deflecting the cut sections of the workpiece. When the jigsaw 400 makes a straight cut to cut the workpiece along a straight line, for example, the weight of the jigsaw 400 is received nearly equally on left and right cut sections, producing the same amount of deflection in each section. However, when the jigsaw 400 performs a curved cut to cut the workpiece along a curved line, the left and right cut sections receive differing amounts of weight, causing one side to deflect more than the other side and, thus, producing a level difference between the two cut sections along the cutting line.

Fig. 21 is a cross-sectional view of the base of the conventional jigsaw and the workpiece, and more specifically shows a cross section of the rear portion of the base 405. Since the base 405 is placed on a left cut section 500A of the workpiece in Fig. 21, the weight of the body of the jigsaw 400 is applied only to the left cut section 500A through the base 405. Consequently, a level difference δ1 is produced along the cutting line 500C in the workpiece between the left cut section 500A and the right cut section 500B. When the jigsaw 400 is performing a curved cut for cutting the workpiece along a line that curves further counterclockwise in this state, the operator directs the front of the jigsaw 400 leftward toward the cutting direction. When the front of the jigsaw 400 is moved leftward, the rear of the jigsaw 400 swings to the right, but the rear portion of the base 405 runs into and gets impeded by the right cut section 500B due to the level difference δ1 at the cutting line 500C. Consequently, the operator must lift the rear of the jigsaw 400 over the right cut section 500B.

Further, when beginning a plunge cut to initiate an interior cut as described above, the operator presses the front edge of the base 405 against the workpiece 500 in order to anchor the jigsaw 400 in position, as shown in Fig. 20. However, since the base 405 can slide over the workpiece 500, the position of the body of the jigsaw 400 is not stable, making it difficult to form a starter hole.

In view of the foregoing, it is an object of the present invention to provide a cutting tool that can perform cutting operations smoothly, even when a level difference between cut sections is produced along the cutting line when executing a curved cut in a flexible workpiece. It is another object of the present invention to provide a cutting tool that can properly anchor the main body of the tool in the correct position when initiating a plunge cut.

### [Solution to Problem]

In order to attain above and other object, the present invention provides a cutting tool that includes a housing; a motor; a plunger; a base; and a plate. The motor is accommodated in the housing. The plunger has an end portion to which a blade is attachable. The plunger is configured to be reciprocated by the motor. The base is attached to the housing. The base is configured to slidingly move along with the housing over a workpiece. The base has a base surface at a side opposite to the housing. The plate is detachably mounted on the base at a position on the base surface for facilitating a curved cut. The plate is formed of a resin. The plate has a length shorter than a length of the base surface in a cutting direction. The plate has a pawl for engagement with the base.

With this configuration, a plate is mounted on the base prior to performing a cutting operation in order to produce a gap equivalent to the thickness of the plate between the workpiece and the base surface. Therefore, even when a level difference is produced along the cutting line when performing a curved cut on a flexible workpiece, the base of the tool can turn along with the tool body in the direction of the curved cut without contacting the cut section on the outside of the curve that is raised higher than the cut section on the inside of the curve. This configuration improves the ease of operating the cutting tool since the operator need not perform annoying actions such as lifting the back of the tool body in order to turn the tool in the direction of cutting.

Preferably, the plate has a rear edge portion in the cutting direction. The rear edge portion is disposed below a gravitational center of a tool body assuming that the cutting tool is postured such that the base is disposed below the housing.

Since the weight of the tool body can be applied to the workpiece through the plate positioned beneath the gravitational center of the tool body in this configuration, the orientation of the tool can be stabilized when performing cutting operations with the plate mounted on the base, enabling accurate positioning without sacrificing ease of operations.

Preferably, the plate has a pawl for engaging with the base.

This configuration enables the plate to be fixed in position relative to the base and simplifies the operations for attaching the plate to and detaching the plate from the base. Accordingly, the plate can easily be attached or detached depending on the type of workpiece and the operation being performed, making the tool more user-friendly.

Preferably, the base has a front edge portion in the cutting direction. The plate has a front edge portion in the cutting direction at which the pawl is provided to engage with the front edge portion of the base so as to detachably fix the plate to the base.

With this construction, the position of the plate is reliably fixed relative to the base, and the pawl on the plate does not contact the workpiece when the plate is being moved over the workpiece during a cutting operation. Accordingly, the tool body can be moved smoothly, enabling a trouble-free cutting operation.

Preferably, the base has a side surface. The plate has a rear edge portion in the cutting direction at which the pawl is provided to engage with the side surface of the base so as to detachably fix the plate to the base.

With this construction, the position of the plate is reliably fixed relative to the base, and the pawl on the plate do not contact the workpiece when the plate is being moved over the workpiece during a cutting operation. Accordingly, the tool body can be moved smoothly, enabling a trouble-free cutting operation.

Preferably, the side surface of the base is formed with a groove for engagement with the pawl.

With this configuration, the pawl does not protrude outward from the side surface of the base. Accordingly, the pawl does not contact the workpiece when the plate is being moved over the workpiece during a cutting operation, enabling smooth moving over the workpiece.

Preferably, the plate is fixed to the base with a screw.

With this configuration, the plate can be reliably fixed relative to the base without providing any pawls on the plate.

Preferably, the base has a front portion in the cutting direction formed with an insertion space for allowing passage of the blade. The insertion space is generally U-shaped opened at the front edge portion. The plate is formed in generally U-shape for covering the front edge portion of the base surface.

This configuration can stabilize the orientation of the tool body without interfering with the reciprocating blade.

Preferably, the plate includes a plate body, and a pair of protruding parts. The pair of protruding parts is extendible rearward from the plate body in the cutting direction and retractable into the plate body.

With this configuration, the protruding parts can be extended outward when performing a straight cut to stabilize the orientation of the tool body, and can be retracted when performing a curved cut to prevent the rear of the base from contacting the workpiece. Accordingly, the plate can be left mounted on the base while changing the state of the protruding parts between their extended state or retracted state according to the type of workpiece and operation being performed. Thus, this configuration improves the ease and effectiveness of operations.

Preferably, the base is formed of a steel material.

This configuration stabilizes the orientation of the tool body and suppresses friction generated between the workpiece. Accordingly, this configuration enables a trouble-free cutting operation.

Preferably, the plate is formed of a resin.

This configuration prevents the surface of the workpiece from being scratched or damaged when the plate is being moved over the workpiece. Accordingly, this configuration makes the tool more user-friendly.

Preferably, the plate has a contact surface configured to contact the workpiece. The contact surface is coated with a friction-reducing agent.

This configuration suppresses friction generated between the workpiece, enabling a trouble-free cutting operation.

Preferably, the cutting tool further includes an antislip part. The antislip part is provided on a front edge portion of the plate.

With this configuration, the antislip part can be placed in contact with the workpiece when initiating a plunge cut in order to reliably position and anchor the tool body. Accordingly, the tool can form a starting hole with great precision, thereby further improving the ease and effectiveness of operations.

According to another aspect, another aspect provides a cutting tool that includes: a housing; a motor; a plunger; a base; and an antislip part. The motor is accommodated in the housing. The plunger has an end portion to which a blade is attachable. The plunger is configured to be reciprocated by the motor. The base is attached to the housing. The base has a base surface in an opposite side from the housing and a front edge portion in a cutting direction. The base is configured to slide over a workpiece. The antislip part is provided on the front edge portion of the base.

With this configuration, the antislip part can be placed in contact with the workpiece when initiating a plunge cut in order to reliably position and anchor the tool body. Accordingly, the tool can form a starting hole with great precision, thereby improving the ease of operations.

Preferably, the antislip part has a slope portion. The slope portion protrudes from the front edge portion of the base toward the housing and slopes rearward in the cutting direction.

With this constraction, the upper part of the antislip part is placed in contact with the workpiece, thereby enabling the blade to be placed in contact with a cutting start position on the workpiece and reliably positioning the tool body. Accordingly, the cutting tool with this construction can form a starting hole with great precision.

Preferably, the antislip part is formed of an elastically deformable material.

With this construction, the antislip part on the plate can be pressed against the workpiece regardless of the type and shape of the workpiece in order to reliably anchor the tool body in position. Thus, this construction enhances the versatility of the cutting tool and improves its ease of operations.

Preferably, the antislip part has a higher coefficient of friction than the base surface.

With this configuration, the antislip part can be reliably fixed without slipping over the workpiece. Accordingly, the cutting tool with this configuration can be reliably anchored, thereby enabling the cutting tool to form a starting hole with great precision.

Preferably, the cutting tool further includes a plate. The plate is detachably mounted on the base in a position on the base surface and having a front edge portion in the cutting direction. The antislip part is provided on the front edge portion of the plate.

By mounting the plate on the base prior to performing cutting operations with the cutting tool having this configuration, the tool can be slid over the workpiece without scratching or damaging the surface of the workpiece, thereby improving convenience. Further, the tool body can be fixed in position by placing the antislip parts in contact with the workpiece, thereby reliably positioning the tool body for a plunge cut while the plate remains mounted on the base. Accordingly, the cutting tool with this configuration can form a starting hole with great precision, further improving the effectiveness of operations.

Preferably, the plate has a plate surface at a side opposite to the housing. The antislip part provides a coefficient of friction higher than that of the plate surface.

With this configuration, the antislip part can be reliably fixed without slipping over the workpiece. Accordingly, the cutting tool with this configuration can be reliably anchored, thereby enabling the cutting tool to form a starting hole with great precision.

### [Advantageous Effects of Invention]

With the cutting tool according to the present invention, a cutting operation can be performed smoothly even when executing a curved cut on a flexible workpiece. Further, with the cutting tool according to the present invention, the tool body can be reliably anchored when initiating a plunge cut, thereby enabling a cutting operation with great precision.

### [Brief Description of Drawings]

[Fig. 1]

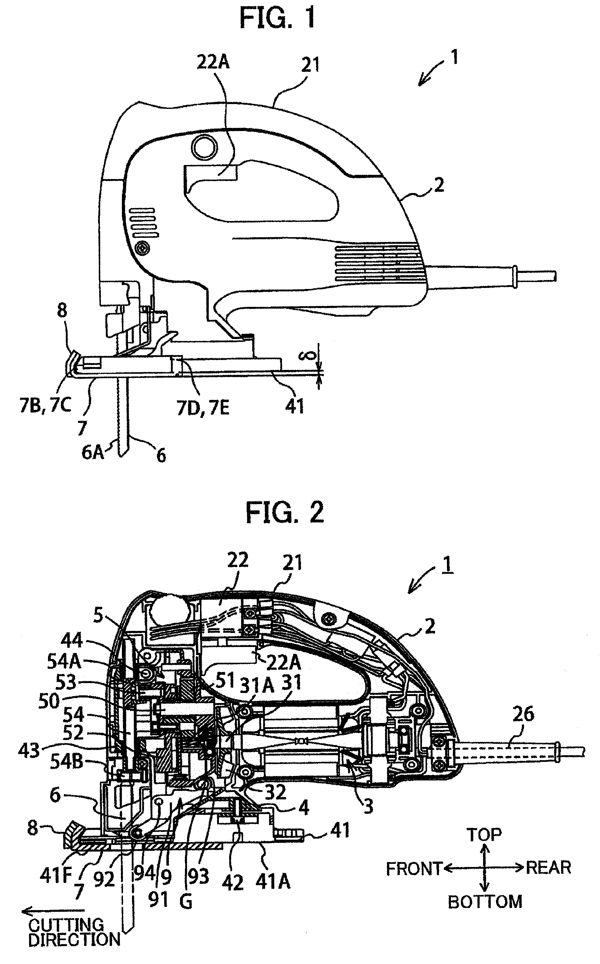

   Fig. 1 is a side elevation view showing an external appearance of a jigsaw according to a first embodiment of the present invention;
[Fig. 2]
   Fig. 2 is a center cross-sectional view showing an internal structure of the jigsaw according to the first embodiment of the present invention;
[Fig. 3]

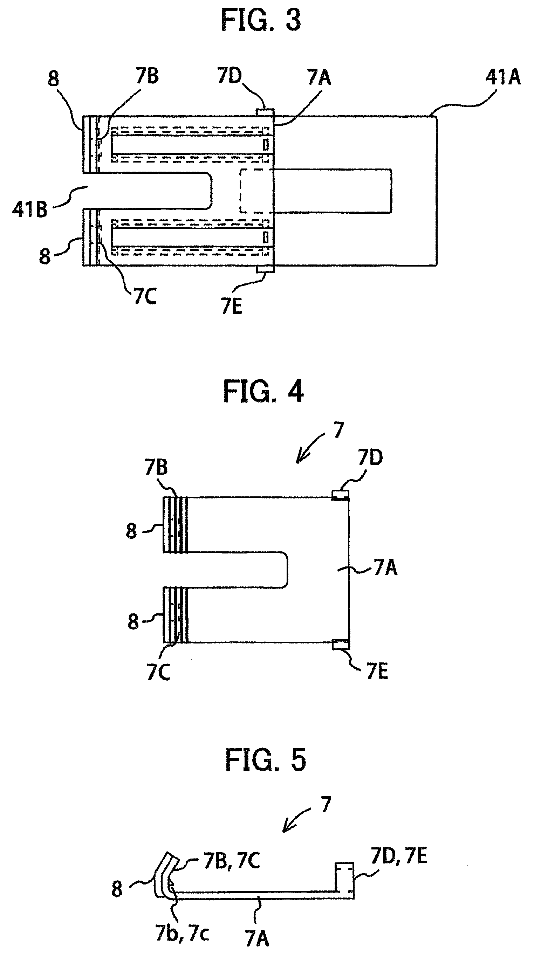

   Fig. 3 is a bottom view of a base when a plate is mounted on the base used in the jigsaw according to the first embodiment of the present invention;
[Fig. 4]
   Fig. 4 is a top view of the plate in the jigsaw according to the first embodiment of the present invention;
[Fig. 5]
   Fig. 5 is a side view of the plate in the jigsaw according to the first embodiment of the present invention;
[Fig. 6]

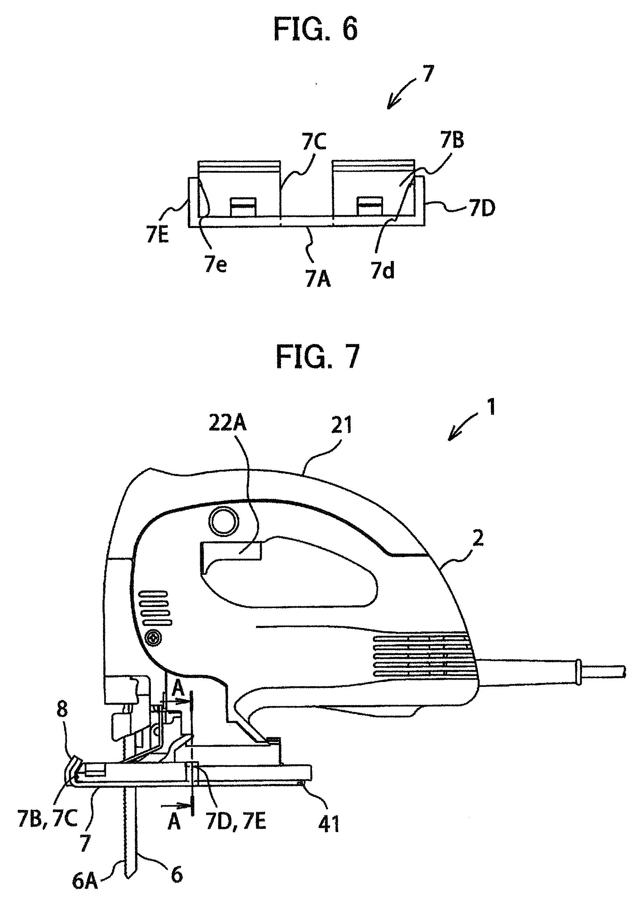

   Fig. 6 is a rear view of the plate in the jigsaw according to the first embodiment of the present invention;
[Fig. 7]
   Fig. 7 is a side elevation view of the jigsaw according to the first embodiment of the present invention when sliding parts are extended;
[Fig. 8]

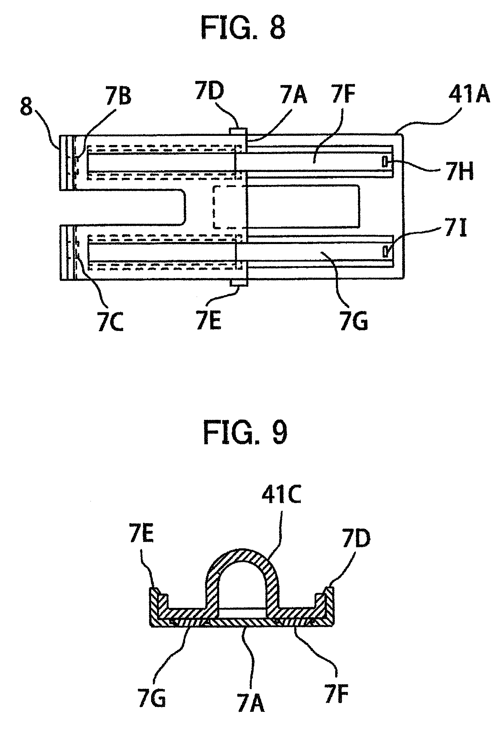

   Fig. 8 is a bottom view of the base in the jigsaw according to the first embodiment of the present invention when the sliding parts are extended;
[Fig. 9]
   Fig. 9 is a cross-sectional view along a line A-A in Fig. 7;
[Fig. 10]

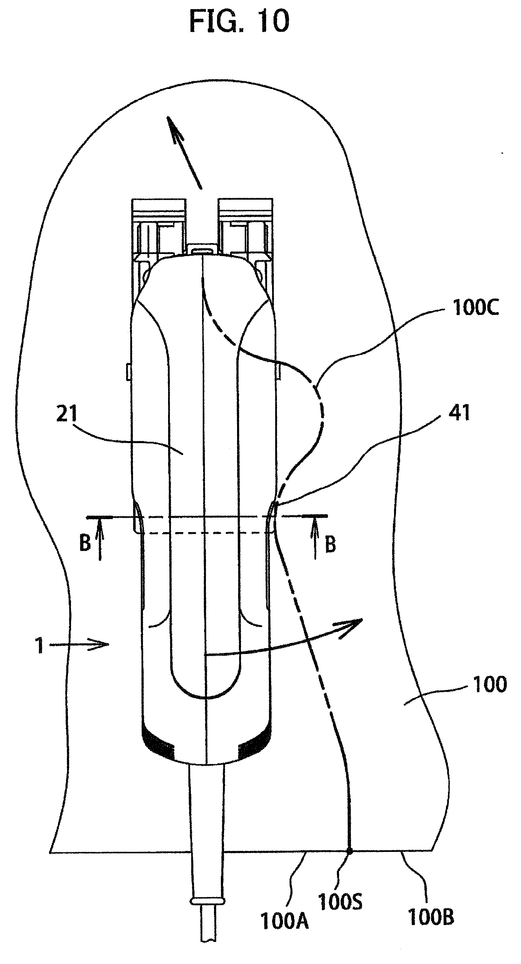

   Fig. 10 is an explanatory diagram illustrating a curved cut performed by the jigsaw according to embodiments of the present invention on a workpiece;
[Fig. 11]

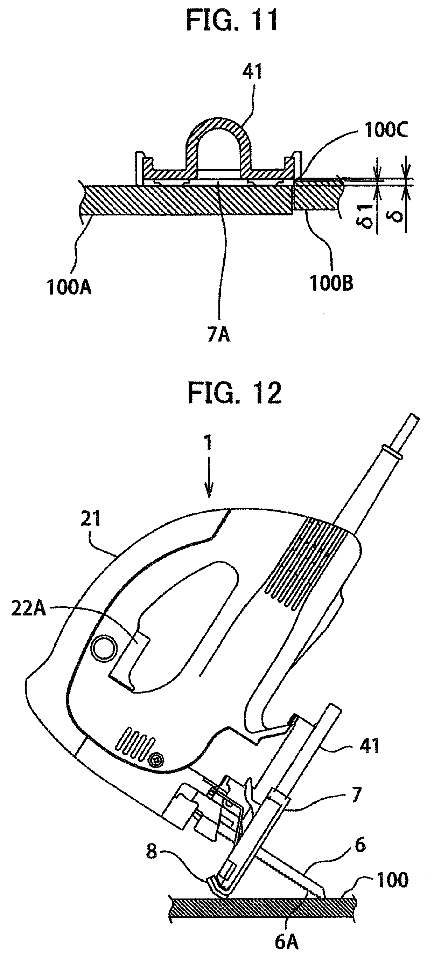

   Fig. 11 is a cross-sectional view along a line B-B in Fig. 10;
[Fig. 12]
   Fig. 12 is an explanatory diagram illustrating a plunge cut performed by the jigsaw according to the first embodiment of the present invention;
[Fig. 13]

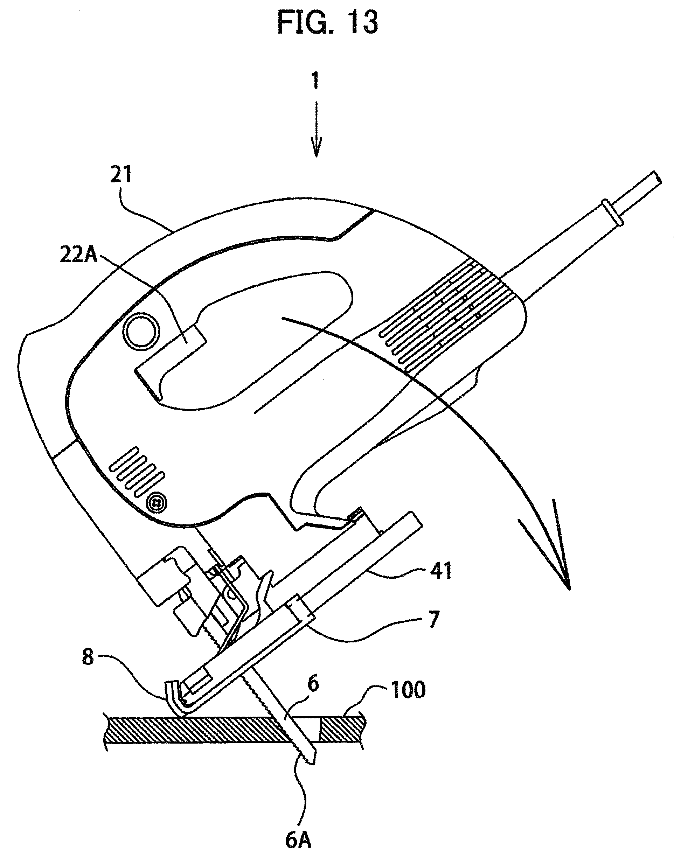

   Fig. 13 is an explanatory diagram illustrating the plunge cut performed by the jigsaw according to the first embodiment of the present invention;
[Fig. 14]

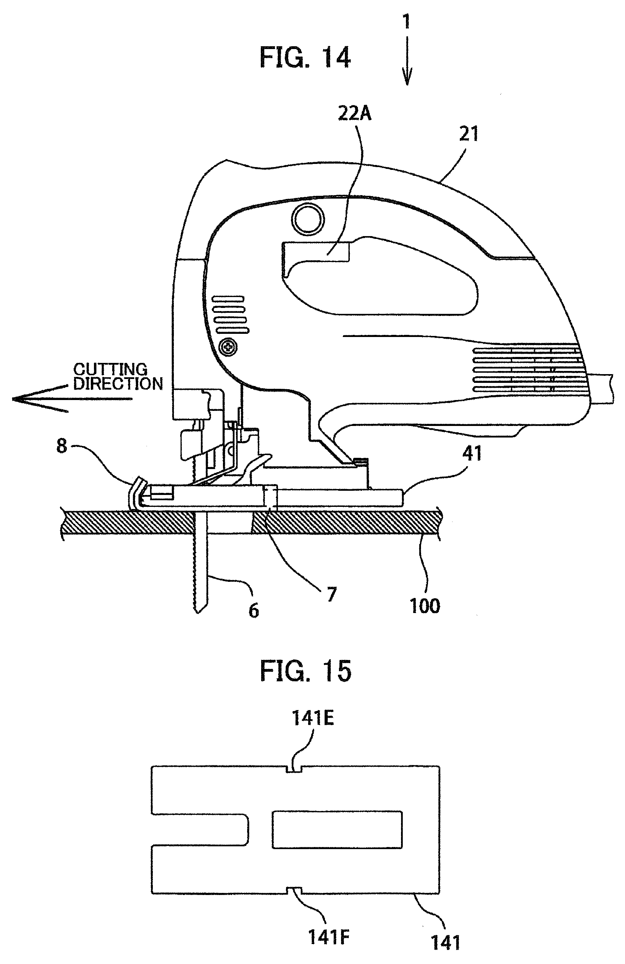

   Fig. 14 is an explanatory diagram illustrating the plunge cut performed by the jigsaw according to the first embodiment of the present invention;
[Fig. 15]
   Fig. 15 is a bottom view of a base used in a jigsaw according to a second embodiment of the present invention;
[Fig. 16]

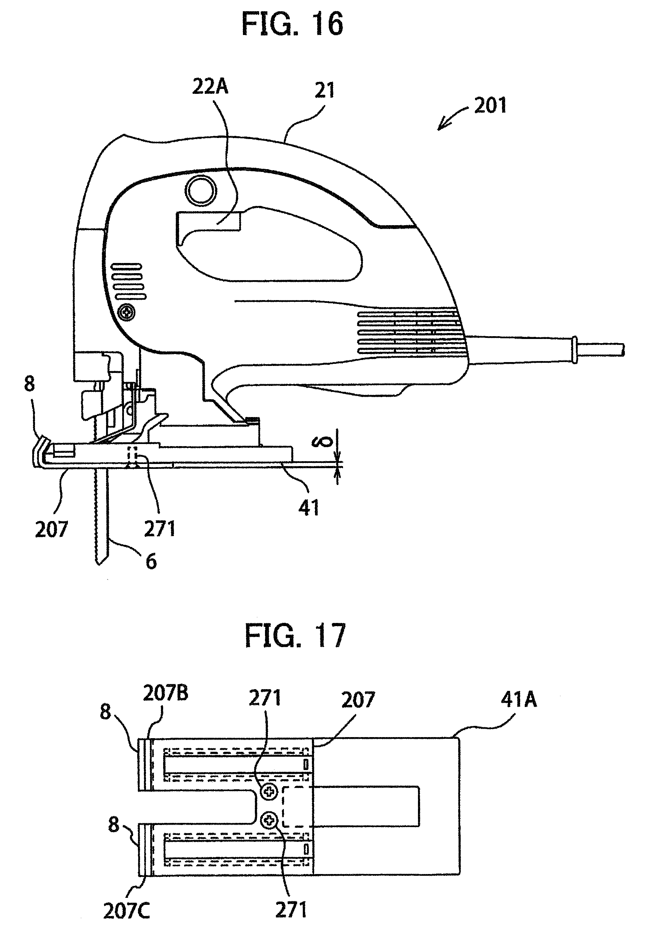

   Fig. 16 is a side elevation view showing an external appearance of a jigsaw according to a third embodiment of the present invention;
[Fig. 17]
   Fig. 17 is a bottom view of a base when a plate is mounted on the base used in the jigsaw according to the third embodiment of the present invention;
[Fig. 18]
   Fig. 18 is a side elevation view showing an external appearance of a jigsaw according to a fourth embodiment;
[Fig. 19]
   Fig. 19 is a side elevation view showing an external appearance of a conventional jigsaw;
[Fig. 20]
   Fig. 20 is an explanatory diagram illustrating a plunge cut performed with a conventional jigsaw; and
[Fig. 21]
   Fig. 21 is a cross-sectional view of a base of a conventional jigsaw and a workpiece.

### [Description of Embodiments]

Next, embodiments of the present invention will be described while referring to the accompanying drawings. In the examples described below, the present invention is applied to a jigsaw.

First, a jigsaw 1 according to a first embodiment of the present invention will be described with reference to Figs. 1 through 14. Fig. 1 is a side elevation view showing the external appearance of the jigsaw 1. Fig. 2 is a center cross-sectional view showing the internal structure of the jigsaw 1. The jigsaw 1 is primarily configured of a housing 2, a motor 3, a gear cover 4, a motion-converting mechanism 5, and a blade 6. The jigsaw 1 is a cutting tool that cuts a workpiece (not shown) with the blade 6. In the following description, the direction in which the motion-converting mechanism 5 is disposed relative to the motor 3 will be defined as the forward direction, while the opposite direction will be defined as the rearward direction. Further, the direction in which the blade 6 extends from a base 41 described later will be defined as the downward direction, while the opposite direction will be defined as the upward direction. A cutting edge 6A is formed on the front of the blade 6 for cutting workpieces. Thus, the forward direction will be called the cutting direction.

The housing 2 is constructed of a frame formed of resin or the like. A handle 21 is provided on the top of the housing 2 and is the member that is gripped by the operator. An opening is formed in the front of the housing 2, and a cover is provided over the opening. The motor 3 is accommodated in the housing 2 beneath the handle 21. The gear cover 4 is also accommodated in the housing 2 at a position in proximity to the motor 3. A power cable 26 is provided in the rear portion of the housing 2 so as to extend rearward therefrom. A trigger switch 22 is provided on the front portion of the handle 21. The trigger switch 22 has a trigger 22A that the operator operates to control the supply of power to the motor 3.

The motor 3 is primarily provided with an output shaft 31 extending in the front-rear direction, and a fan 32. A pinion gear 31A is provided on the distal end (front end) of the output shaft 31. The fan 32 is provided to the rear of the pinion gear 31A and is coaxially fixed on the output shaft 31. The fan 32 draws cooling air into the housing 2 through an air intake (not shown) formed in the housing 2 in order to cool the motor 3, motion-converting mechanism 5, and the like.

A base 41 is attached to the bottom portion of the gear cover 4. The base 41 has a base material of aluminum, steel or the like, and is formed in a general rectangular shape. The gear cover 4 accommodates the motion-converting mechanism 5. The gear cover 4 is provided with an orbital mechanism 9 that implements what is known as orbital action for swiveling the blade 6 in association with rotation of the motor 3.

The base 41 is fixed to the bottom-surface side of the housing 2 by a bolt 42, with the longitudinal dimension of the base 41 aligned in the cutting direction. The bottom surface of the base 41 opposite the housing 2 is defined as a base surface 41A that confronts the workpiece. A plate 7 is provided beneath the front side of the base 41. The plate 7 is formed of a thermoplastic such as polyacetal (POM). The plate 7 is detachably mounted on the base 41 in a position on the base surface 41A of the base 41. Antislip parts 8 are provided on the front edge of the plate 7. The antislip parts 8 are formed of an elastically deformable material and have a higher coefficient of friction than the base 41 and plate 7.

Here, the shapes of the base 41, plate 7, and antislip parts 8 will be described in greater detail with reference to Figs. 2 through 9. Fig. 3 shows the base surface 41A when the plate 7 is mounted on the base 41. An insertion space 41B is formed in the front side of the base 41 and has a general U-shape that is open on the front side for allowing passage of the blade 6. The blade 6 extends downward through the insertion space 41B. As shown in Figs. 2 and 9, the base 41 also has a center portion 41C that is shaped like a hollow semicircular column. The base 41 is fixed to the housing 2 at the center portion 41C by the bolt 42. As shown in Fig. 2, guide holes 41F are respectively formed in the pair of front-end portions of the base 41 that extend forward on either side of the insertion space 41B. The guide holes 41F penetrate the respective front-end portions from their side surfaces to the insertion space 41B and function to receive guide members (not shown) in a direction orthogonal to the cutting direction.

The plate 7 has a plate body 7A formed in a plate shape with a thickness δ. Figs. 4, 5, and 6 respectively show top, side, and rear views of the plate 7. The plate body 7A is formed in a general U-shape for covering the front end of the base 41 and is shorter than the base 41 in the longitudinal direction. Thus, an insertion space is formed in the front section of the plate 7 for allowing passage of the blade 6. As shown in Fig. 2, the rear edge of the plate body 7A reaches a position approximately below the center of gravity G of the jigsaw 1.

The plate 7 also has front pawls 7B and 7C respectively provided on the two front ends of the plate body 7A that extend forward, and rear pawls 7D and 7E provided on both side surfaces of the plate body 7A at the rear edge of the same. The front pawls 7B and 7C protrude upward from the front edge of the plate body 7A, and then slope further upward toward the rear. The front pawls 7B and 7C are provided with small protrusions 7b and 7c that protrude toward the base 41 (rearward). When the plate 7 is mounted on the base 41, the small protrusions 7b and 7c are inserted into recessed parts formed in the front edge of the base 41. The rear pawls 7D and 7E protrude upward from the side surfaces of the plate 7 at the rear edge of the same. The rear pawls 7D and 7E are provided with small protrusions 7d and 7e that protrude toward the interior of the base 41. The plate 7 is mounted on the base 41 so that the plate body 7A is positioned on the base surface 41A, by engaging the front pawls 7B and 7C with the pair of front-end portions of the base 41 that extend forward and by engaging the rear pawls 7D and 7E with the side surfaces of the base 41. A step is formed in the top surface of the base 41 at the position corresponding to the rear pawls 7D and 7E so that the front portion of the base 41 is higher than the rear portion. When the plate 7 is mounted on the base 41, the small protrusions 7d and 7e of the corresponding rear pawls 7D and 7E abut the step, preventing the plate 7 from being pulled forward off the base 41. In other words, the plate 7 holds the base 41 in the longitudinal direction by gripping the base 41 with the front pawls 7B and 7C and the small protrusions 7d and 7e. The plate 7 also holds the base 41 in the lateral direction orthogonal to the longitudinal direction by gripping the base 41 with the rear pawls 7D and 7E and the small protrusions 7b and 7c. When the plate 7 is mounted on the base 41, the bottom surface of the plate 7 becomes the surface that contacts the workpiece. In order to reduce friction generated between the plate 7 and the workpiece, the bottom surface of the plate 7 is coated with a friction-reducing agent.

The plate 7 also includes a pair of sliding parts 7F and 7G that can be extended rearward from the rear edge of the plate body 7A and can be retracted into the plate body 7A. Fig. 7 shows a side elevation view of the jigsaw 1 when the sliding parts 7F and 7G are extended. Fig. 8 shows the base surface 41A of the base 41. Fig. 9 is a cross-sectional view along a line A-A in Fig. 7. The sliding parts 7F and 7G are shaped like strips and are accommodated in the plate body 7A, as shown in Fig. 3. Grooves 7H and 7I are respectively formed in the rear ends of the corresponding sliding parts 7F and 7G. The operator can grip the grooves 7H and 7I with fingers to pull the sliding parts 7F and 7G rearward from the plate body 7A. When the plate 7 is mounted on the base 41 and the sliding parts 7F and 7G are protruding from the plate body 7A, the rear ends of the sliding parts 7F and 7G are positioned slightly forward of the rear edge of the base 41, as shown in Fig. 8. When the jigsaw 1 is operated while the sliding parts 7F and 7G are extended, the surfaces of the sliding parts 7F and 7G opposite the housing 2 side contact the workpiece. In order to reduce friction generated between the sliding parts 7F and 7G and the workpiece, the surfaces of the sliding parts 7F and 7G on the opposite side from the housing 2 are coated with a friction-reducing agent.

The antislip parts 8 are provided on the top of the front pawls 7B and 7C, respectively. The bottom edges of the antislip parts 8 are positioned higher than the bottom surface of the plate body 7A. The antislip parts 8 are shaped so as to protrude first upward and then slope upward toward the rear, and have a higher coefficient of friction than that of the base surface 41A of the base 41 and the plate 7.

Returning to Fig. 2, the motion-converting mechanism 5 is primarily configured of a gear 51, a weight 52, an engaging pin 53, and a plunger 54. The gear 51 is engaged with the pinion gear 31A and is rotatably supported in the gear cover 4 by a support shaft 50 extending forward from the gear cover 4. The weight 52 is disposed in front of the gear 51 and is supported on the support shaft 50. The weight 52 functions as a counterweight to the plunger 54 by moving in the direction opposite the plunger 54 in order to reduce vibrations during operations of the jigsaw 1.

The engaging pin 53 is provided forward of the weight 52 and rotates about the support shaft 50 together with the gear 51. The engaging pin 53 protrudes forward so as to be parallel to but not aligned with the output shaft 31.

The plunger 54 has a general columnar shape and extends in a direction orthogonal to the output shaft 31 (vertical direction). The plunger 54 is supported in the housing 2 so as to be rotatable and vertically reciprocal. Specifically, the plunger 54 can rotate about a shaft oriented in the left-right direction (a rotational shaft 44 described later). The plunger 54 is provided with a pin receiving part 54A, and a blade retaining part 54B.

The pin receiving part 54A is provided in the approximate vertical center of the plunger 54. The pin receiving part 54A has a general U-shape in a side view, with the opening of the "U" facing rearward. The pin receiving part 54A is elongated in the left-right direction. The engaging pin 53 is inserted into a groove formed in the pin receiving part 54A. The engaging pin 53 is permitted to move in the left and right directions within the groove of the pin receiving part 54A, but is restricted from moving vertically. Accordingly, the pin receiving part 54A moves only vertically in response to vertical movement of the engaging pin 53. In this way, the motion-converting mechanism 5 can convert rotary motion outputted from the output shaft 31 to up-down linear motion. As will be described later, the pin receiving part 54A is formed with sufficient depth to be able to retain the engaging pin 53 as the plunger 54 rotates about a rotational shaft 44.

The blade retaining part 54B is provided on the bottom end of the plunger 54. The blade retaining part 54B holds the blade 6 that is detachably mounted therein. In a plan view, the center of the plunger 54 is substantially aligned with the center position of the blade 6.

A plunger guide 43 supports the plunger 54 at its approximate vertical center region so that the plunger 54 can slide vertically. The top of the plunger guide 43 is rotatably supported in the gear cover 4 so that the plunger guide 43 can revolve about the rotational shaft 44 oriented in the left-right direction. When the plunger guide 43 revolves about the rotational shaft 44, the plunger 54 and blade 6 also revolve about the rotational shaft 44. In this way, the plunger 54 and blade 6 can follow the orbital motion of the orbital mechanism 9.

The orbital mechanism 9 is primarily provided with a roller holder 91, a roller 92, and a switching part 93. As shown in Fig. 2, the roller holder 91 has a general L-shape in a side view and is rotatably supported on the gear cover 4 about a support part 94. The roller 92 is positioned in the front end of the roller holder 91 and is rotatably supported therein. The roller 92 has a groove formed around its entire circumferential surface that is recessed radially inward. The roller 92 contacts the rear surface of the blade 6 with the blade 6 positioned in the groove. The degree of orbital motion performed by the orbital mechanism 9 can be adjusted with the switching part 93.

Next, the operations of the jigsaw 1 will be described. The power cable 26 is connected to a commercial power supply (not shown). The motor 3 rotates when the operator pulls the trigger 22A. The motion-converting mechanism 5 converts the rotation of the motor 3 from rotary motion to reciprocal motion and transfers this motion to the plunger 54 and blade 6, causing the blade 6 to move up and down. At the same time, the roller holder 91 rotates about the support part 94. The roller 92 presses against the blade 6, causing the blade 6 to pivot about the rotational shaft 44. Through the up-down movement of the blade 6 and rotation of the roller holder 91, the distal end of the blade 6, i.e., the cutting edge 6A, moves along a substantially elliptical path (orbital motion). The jigsaw 1 halts when the operator releases the trigger 22A.

When the jigsaw 1 having the configuration described above is operated to perform a straight cut in a workpiece beginning from the peripheral edge of the workpiece and when the workpiece is formed of a material that cuts easily and smoothly or when smoothness is not critical, the cutting operation is preferably performed without the plate 7 being mounted on the base 41. The operator grips the handle 21 of the jigsaw 1 and places the front-end portion of the base surface 41A on the workpiece, with the cutting edge 6A of the blade 6 in contact with a cutting start position on the peripheral edge of the workpiece. Next, the operator squeezes the trigger 22A and pushes the body of the jigsaw 1 in the cutting direction so that the workpiece is cut by the reciprocating blade 6. At this time, the base surface 41A slides over the workpiece in the cutting direction. Since the jigsaw 1 is operated while the entire base surface 41A is pressed against the workpiece, the orientation of the tool body is stable and can slide smoothly over the workpiece with little friction. Accordingly, a precise cut can be made in the workpiece.

In order to perform a straight cut without damaging the workpiece, it is preferable to first mount the plate 7 on the base 41 and to perform the cutting operation after extending the sliding parts 7F and 7G from the plate body 7A. In this case, the plate body 7A and the sliding parts 7F and 7G slide over the workpiece. Accordingly, the orientation of the tool body is stabilized, enabling the jigsaw 1 to cut the workpiece with good precision. Further, since the bottom surface of the plate body 7A and the surfaces of the sliding parts 7F and 7G that contact the workpiece have been precoated with a friction-reducing agent, the jigsaw 1 can slide more smoothly over the workpiece, cutting smoothly through the workpiece without leaving a rough cut.

On the other hand, when performing a curved cut in a workpiece, and particularly on a flexible workpiece such as wood veneer, it is preferable to mount the plate 7 on the base 41 and to execute the cutting operation with the sliding parts 7F and 7G withdrawn into the plate body 7A. Curved cuts performed using the jigsaw 1 will be described next with reference to Figs. 10 and 11. Fig. 10 is an explanatory diagram illustrating a curved cut performed by the jigsaw 1 on a workpiece 100. Fig. 11 is a cross-sectional view along a line B-B in Fig. 10.

Prior to performing the cutting operation, the operator mounts the plate 7 on the base 41 of the jigsaw 1. To mount the plate 7, the operator first places the front pawls 7B and 7C against the front edge of the base 41, with the small protrusions 7b and 7c inserted into the recessed parts formed in the front edge of the base 41, and subsequently rotates the plate 7 so that the rear pawls 7D and 7E move toward the base 41. When the small protrusions 7d and 7e of the rear pawls 7D and 7E contact the bottom surface of the base 41, the rear pawls 7D and 7E elastically deform by expanding outward so that the small protrusions 7d and 7e slide up along the side surfaces of the base 41. Once the small protrusions 7d and 7e pass the top edge of the base 41 next to the step formed in the top edge, the rear pawls 7D and 7E return to their original shapes, with the small protrusions 7d and 7e contacting the step. At this time, the plate 7 is fully mounted. Note, for this operation it is preferable that the sliding parts 7F and 7G are not extended from the plate body 7A but are retracted therein.

With the plate 7 in this state, the operator grips the handle 21 of the jigsaw 1 and places the front-end portion of the plate body 7A, and specifically the surface of the plate body 7A on the side opposite the housing 2 on the workpiece 100, with the cutting edge 6A of the blade 6 contacting a cutting start position 100S on the peripheral edge of the workpiece 100. Next, the operator pushes the body of the jigsaw 1 in the cutting direction so that the workpiece is cut by the vertically reciprocating blade 6. At this time, the bottom surface of the plate body 7A slides over the workpiece 100. The rear edge of this bottom surface is positioned slightly rearward than the position directly beneath the center of gravity G of the body of the jigsaw 1 but approximately beneath the center of gravity G. Hence, the weight of the body is applied to the workpiece 100 through the bottom surface of the plate body 7A. This arrangement not only stabilizes the orientation of the jigsaw 1 so that its body does not wobble, but also shortens the length of the bottom surface on the plate body 7A relative to the base 41. Further, the rear portion of the base surface 41A on the base 41 is higher than the bottom surface on the plate body 7A by the thickness δ of the plate body 7A, as illustrated in Fig. 1. Consequently, the base surface 41A of the base 41 does not contact the workpiece 100, as a gap corresponding to the thickness δ of the plate body 7A is formed between the two.

As the cutting operation progresses, deflection begins to appear in cut sections 100A and 100B of the workpiece 100. When the cutting operation has proceeded to the point shown in Fig. 10, the cut section 100A of the workpiece 100 is deflected by the weight of the body of the jigsaw 1 and the pressure applied by the operator via the plate body 7A in contact with the cut section 100A. On the other hand, very little weight and pressure is applied to the cut section 100B. Thus, the deflection in the cut section 100B is smaller than that produced in the cut section 100A. As a result, a level difference δ1 is produced along the cutting area 100C between the cut sections 100A and 100B of the workpiece 100, as illustrated in Fig. 11.

If the operator directs the front of the jigsaw 1 in this state leftward in Fig. 10 in order to cut a curved line that curves further counterclockwise in the workpiece 100, the rear end of the jigsaw 1 will swing to the right in Fig. 10. However, since a gap equivalent to the thickness δ of the plate body 7A is formed between the rear portion of the base 41 and the workpiece 100 as described above, the rear end of the base 41 will not contact the cut section 100B if the thickness δ is greater than the level difference δ1 produced at the cutting area 100C. Therefore, the jigsaw 1 can perform the cutting operation while smoothly adjusting the direction in which its body advances.

Thus, the jigsaw 1 can perform a smooth cutting operation for a curved cut in a workpiece, even when a level difference is generated at the cutting area.

Next, an example of performing a plunge cut in the workpiece 100 with the jigsaw 1 will be described with reference to Figs. 12 through 14. A plunge cut in this description is an operation performed to begin cutting from an interior position of the workpiece, i.e., a position not on the peripheral edge of the workpiece.

Prior to performing a plunge cut, the operator mounts the plate 7 on the base 41 of the jigsaw 1. Next, the operator grips the handle 21 and tilts the top of the tool body forward, as illustrated in Fig. 12. The operator then presses the antislip parts 8 provided on the front edge of the plate 7 against the workpiece 100 and places the tip of the cutting edge 6A on the front of the blade 6 in contact with the cutting start position. As described above, the antislip parts 8 have a higher coefficient of friction than the base 41 and plate 7 and are formed of a material that is both elastically deformable and shaped to slope upward toward the rear. Accordingly, the material and configuration of the antislip parts 8 prevent the antislip parts 8 from sliding over the workpiece 100, regardless the shape of the cutting start position.

With the antislip parts 8 pressed against the workpiece 100, the operator squeezes the trigger 22A, causing the blade 6 to reciprocate as the jigsaw 1 begins cutting into the workpiece 100. As the blade 6 continues to reciprocate, the back end of the jigsaw 1 slowly lowers as the body of the jigsaw 1 rotates about the antislip parts 8, forming a hole in the workpiece 100, as illustrated in Fig. 13.

Once the starter hole has been formed, the operator grips the handle 21 and, with the bottom surface of the plate 7 in contact with the workpiece 100, pushes the body of the jigsaw 1 in the cutting direction, thereby cutting the workpiece 100 with the reciprocating blade 6, as illustrated in Fig. 14. Since the antislip parts 8 are positioned above the bottom surface of the plate 7, the antislip parts 8 do not contact the workpiece 100 at this time, enabling the bottom surface of the plate 7 to slide over the workpiece 100. Accordingly, the cutting operation performed on the workpiece can be continued after forming the starter hole, without having to remove the plate 7.

Since the blade 6 of the jigsaw 1 can be accurately positioned during a plunge cut for forming a starter hole and the jigsaw 1 can continue cutting operations after the starter hole has been formed, as described above, the jigsaw 1 according to the embodiment can perform interior cutting operations smoothly and rapidly.

Since the plate 7 is detachably mounted on the base surface 41A of the base 41, as described above in the present embodiment, the jigsaw 1 can be moved smoothly over the workpiece during curved cuts, even when a level difference is produced between cut sections of the workpiece along the cutting area, by mounting the plate 7 on the base 41 before beginning the cutting operation so that the rear of the base 41 does not come into contact with a cut section of the workpiece. Therefore, the jigsaw 1 according to the embodiment improves the ease of operations. Further, since the plate 7 is fixed to the base 41 with pawls 7B, 7C, 7D, and 7E, the plate 7 can easily be mounted and removed according to the type of workpiece being cut and the type of cutting operation, without the need of a tool or the like, thereby improving user-friendliness. Further, the antislip parts 8 provided on the front edge of the plate 7 can hold the jigsaw 1 in a fixed position without slipping over the workpiece 100, thereby precisely positioning the jigsaw 1 for a plunge cut when performing an interior cutting operation. Therefore, interior cutting operations can be performed smoothly and with good precision, further improving operational efficiency.

Next, a jigsaw according to a second embodiment of the present invention will be described with reference to Fig. 15. The second embodiment differs from the first embodiment in the shape of the base. The remaining structure of the jigsaw in the second embodiment is identical to that in the first embodiment, and like parts and components are designated with the same reference numerals to avoid duplicating description.

Fig. 15 shows the surface of a base 141 used in the jigsaw according to the second embodiment of the present invention. In the second embodiment, a pair of grooves 141D and 141E is formed in the front-rear center region of the base 141, with one formed in each side edge at opposing positions. The grooves 141D and 141E are formed at positions corresponding to the rear pawls 7D and 7E provided on the side surfaces of the plate 7 at the rear edge thereof and are capable of engaging with the rear pawls 7D and 7E.

By forming the base 141 as described above, the rear pawls 7D and 7E can engage with the base 141 without protruding outward from the side surface of the same. This configuration prevents the rear pawls 7D and 7E from contacting the workpiece when performing a cutting operation with the plate 7 mounted on the base 141. Therefore, the jigsaw according to the second embodiment can smoothly move over the workpiece and, hence, can smoothly cut the workpiece.

Next, a jigsaw according to a third embodiment of the present invention will be described with reference to Figs. 16 and 17. The third embodiment differs from the embodiments described above in the shape of the plate. The remaining structure of the jigsaw according to the third embodiment is identical to the previous embodiments, and like parts and components are designated with the same reference numerals to avoid duplicating description.

Fig. 16 is a side elevation view showing the external appearance of a jigsaw 201 according to the third embodiment of the present invention, and Fig. 17 shows the base surface 41A in the jigsaw 201. A plate 207 is fixed to the base 41 with screws 271. In the third embodiment, the plate 207 has a pair of pawls 207B and 207C on its front edge, but is not provided with pawls on its side surfaces at the rear edge, unlike in the embodiments described above.

By securing the plate 207 to the base 41 with screws, as described above, the plate 207 can be fastened to the base 41 without requiring pawls on its side surface, thereby preventing the plate 207 from contacting the workpiece during a cutting operation performed with the plate 207 mounted on the base 41. Accordingly, the jigsaw 201 according to the third embodiment can move smoothly over the workpiece and can cut the workpiece smoothly.

Note that while the pawls 207B and 207C are provided on the front end of the plate 207 in the third embodiment, a structure that omits the pawls 207B and 207C is also possible. In such a case, the antislip parts 8 should be provided on the front edge of the base 41, as will be described in a fourth embodiment.

Next, a jigsaw according to the fourth embodiment of the present invention will be described with reference to Fig. 18. The fourth embodiment differs from the embodiments described above in that the antislip parts are provided on the base itself. The remaining structure of the jigsaw is identical to the embodiments described above, and like parts and components are designated with the same reference numerals to avoid duplicating description.

Fig. 18 is a side elevation view showing the external appearance of a jigsaw 301 according to the fourth embodiment of the present invention. As shown in Fig. 18, antislip parts 308 are directly fixed to the front edge of a base 341. With this configuration, a plunge cut can be performed in a workpiece to form a starter hole, without having to mount a plate 7 provided with antislip parts 8 on the base 341, enabling the operator to perform cutting operations more rapidly during interior cutting operations requiring only straight cuts in workpieces that are not easily damaged, for example. Further, by fastening a plate having no pawls to the surface of the base 341 using screws, the jigsaw 301 of the fourth embodiment can also perform operations that require a plate.

By configuring the antislip parts 8 not to protrude toward the workpiece side of the sliding surface (bottom surface of the base 41 or bottom surface of the plate 7) as described above, the antislip parts 8 can facilitate smooth, quick cutting operations during normal cuts and can function to prevent slipping during interior cuts.

### [Reference Signs List]

- 1: jigsaw
- 2: housing
- 3: motor
- 4: gear cover
- 6: blade
- 6A: cutting edge
- 7: plate
- 7A: plate body
- 7B, 7C: front pawl
- 7D, 7E: rear pawl
- 7F, 7G: sliding part
- 7H, 7I: groove
- 8: antislip part
- 21: handle
- 22A: trigger
- 41: base
- 41A: base surface
- 41B: insertion space

## Claims

1. A cutting tool comprising:
a housing;
a motor accommodated in the housing;
a plunger having an end portion to which a blade is attachable, the plunger being configured to be reciprocated by the motor;
a base attached to the housing, and configured to slidingly move along with the housing over a workpiece, the base having a base surface at a side opposite to the housing; and
a plate detachably mounted on the base at a position on the base surface, the plate having a length shorter than a length of the base surface in a cutting direction.

2. The cutting tool according to claim 1, wherein the plate has a rear edge portion in the cutting direction, the rear edge portion being disposed below a gravitational center of a tool body assuming that the cutting tool is postured such that the base is disposed below the housing.

3. The cutting tool according to claim 1 or 2, wherein the plate has a pawl for engaging with the base.

4. The cutting tool according to claim 3, wherein the base has a front edge portion in the cutting direction; and
wherein the plate has a front edge portion in the cutting direction at which the pawl is provided to engage with the front edge portion of the base so as to detachably fix the plate to the base.

5. The cutting tool according to claim 3, wherein the base has a side surface; and
wherein the plate has a rear edge portion in the cutting direction at which the pawl is provided to engage with the side surface of the base so as to detachably fix the plate to the base.

6. The cutting tool according to claim 5, wherein the side surface of the base is formed with a groove for engagement with the pawl.

7. The cutting tool according to claim 1 or 2, wherein the plate is fixed to the base with a screw.

8. The cutting tool according to claim 1, wherein the base has a front portion in the cutting direction formed with an insertion space for allowing passage of the blade, the insertion space being generally U-shaped opened at the front edge portion; and
wherein the plate is formed in generally U-shape for covering the front edge portion of the base surface.

9. The cutting tool according to claim 1, wherein the plate comprises a plate body, and a pair of protruding parts which is extendible rearward from the plate body in the cutting direction and retractable into the plate body.

10. The cutting tool according to claim 1, wherein the base is formed of a steel material.

11. The cutting tool according to claim 1, wherein the plate is formed of a resin.

12. The cutting tool according to claim 1, wherein the plate has a contact surface configured to contact the workpiece, the contact surface being coated with a friction-reducing agent.

13. The cutting tool according to claim 1, further comprising an antislip part provided on a front edge portion of the plate.

14. A cutting tool comprising:
a housing;
a motor accommodated in the housing;
a plunger having an end portion to which a blade is attachable, the plunger being configured to be reciprocated by the motor;
a base attached to the housing and having a base surface in an opposite side from the housing and a front edge portion in a cutting direction, the base being configured to slide over a workpiece; and
an antislip part provided on the front edge portion of the base.

15. The cutting tool according to claim 14, wherein the antislip part has a slope portion protruding from the front edge portion of the base toward the housing and sloping rearward in the cutting direction.

16. The cutting tool according to claim 14 or 15, wherein the antislip part is formed of an elastically deformable material.

17. The cutting tool according to claim 14, wherein the antislip part has a higher coefficient of friction than the base surface.

18. The cutting tool according to claim 14, further comprising a plate detachably mounted on the base in a position on the base surface and having a front edge portion in the cutting direction,
wherein the antislip part is provided on the front edge portion of the plate.

19. The cutting tool according to claim 18, wherein the plate has a plate surface at a side opposite to the housing, the antislip part providing a coefficient of friction higher than that of the plate surface.
